# EUROPEAN PATENT APPLICATION

(11) **EP 4 642 062 A1**
(43) Date of publication of application: **29.10.2025**
(21) Application number: 23906148.4
(22) Date of filing: 11.04.2023
(51) Int. Cl.: H04W 4/80, H04W 12/03, H04L 9/32

(54) **DEVICE FOR ENCRYPTING PRIVATE KEYS/SEED PHRASES OF CRYPTO ASSET WALLETS AND STORING ON NFC CHIPS AND METHOD FOR THE DEVICE**

(30) Priority: 21.12.2022 ES 202231090
(71) Applicant: Rosa Morales, Cristóbal Javier, 4410-496 Arcozelo (PT)
(72) Inventor: Rosa Morales, Cristóbal Javier, 4410-496 Arcozelo (PT)
(74) Representative: Álvarez López, Sonia
(86) International application number: PCT/ES2023/070231
(87) International publication number: WO 2024/133983

(57) **Abstract**

Device (1) for encrypting private keys/seeds of cryptoasset wallets and storage on NFC cards, comprising:
- a first microcontroller (2), with a first microprocessor (20) with embedded operating system, memory (22) for operation and storage of firmware, and interfaces (23) with the rest of the elements of the device,
- a secure hardware element (21), with a second microcontroller (21a) with a second microprocessor (21b) and firmware physically separated from the first microcontroller (2) and first microprocessor (20), for the functions of cryptogram generation and management of any sensitive process data,
- an NFC card (4) reader/writer (3),
- a screen (5),
- a keyboard (6),
- readers (7) of biometric variables, and
- a power supply (8);
- and wherein the hardware secure element (21), comprises a secure memory (21c), separate from the general operating memory (22).

The invention also comprises a method for such a device.

## Description

### OBJECT OF THE INVENTION

The present invention relates to a device for encrypting private keys/seeds of cryptoasset wallets and storage on NFC cards, and to a method for such a device.

### BACKGROUND OF THE INVENTION

To protect certain cryptoassets, such as cryptocurrencies, their use is restricted by private keys.

Although so-called cold encryption hardware wallets, and the corresponding encryption algorithms thereof, exist, all these systems always generate the so-called recovery seeds or phrases, so that in case of loss, theft, or identification, attack or vulnerability of the same, with these seeds generated by them, users can recover their cryptoassets. The protection of these recovery seeds/phrases is not properly resolved at today's date, since the maximum is always to store them in the clear outside any device with Internet connection, so that currently any user seeking to protect them safely chooses to write them on physical paper or carve them on steel plates, with no further protection than the physical concealment to third parties of such systems, therefore any third party with access to the paper or steel plates, will have direct access to the cryptoassets.

### DESCRIPTION OF THE INVENTION

The device for encrypting private keys/seeds of cryptoasset wallets and storage on NFC cards of the invention comprises:
- a first microcontroller, comprising a first microprocessor with embedded operating system for peripheral control, operating and storage of firmware memories, and interfaces with the other elements of the device,
- a secure hardware element, comprising a second microcontroller with a second microprocessor and firmware, physically separated from the first microcontroller and first microprocessor (the one controlling the various peripherals), designed exclusively for the functions of cryptogram generation and management of any sensitive data of the process,
- an NFC card reader/writer,
- a screen,
- a keyboard (which can be physical or a virtual keyboard displayed on a touch screen can be used),
- biometric variable readers (e.g., fingerprint, iris or vein structure), and
- a power supply.

The secure hardware element also comprises a secure memory, separate from the general operating memory, for storing maximum security data.

For its part, the method of the invention comprises the stages of:
- encryption of a key; comprising the following sub-stages:
   - entering an encryption command using physical or virtual keyboard,
   - reading an NFC card and verifying that it is a blank card (with no stored data), through an NFC card reader/writer, and with the process ending if it is not a blank NFC card and displaying this result on the screen,
   - if the NFC card is blank, displaying on the screen its unique identification code, so that the user verifies this code with the one printed on the card itself, -entering the key to be encrypted through the keyboard (it is preferred to use the BIPS-39 standard, proposing the words of the seed with only the first 4 letters)
   - displaying on the screen, without the possibility of editing, the key entered - to avoid error/alteration due to the handling of the interface; this way the user can verify that the text/message to be encrypted is correct before encrypting it - and validating the key displayed (by pressing continue, for example),
   - displaying on the screen a message requesting a first password for encrypting the key entered,
   - entering the password using the keyboard, generating a first cryptogram containing the encrypted key (using the corresponding HASH or encryption algorithm), and temporarily storing the first cryptogram in the secure hardware element to be used in the next process,
   - requesting biometric signature of the authorised person(s) to perform key decryption, and entering the biometric signatures of the authorised person(s), through biometric variable readers (fingerprint, iris, or vein structure),
   - storing the biometric signatures in the secure hardware element,
   - requesting the entry of a second password for encrypting the biometric variables,
   - entering said second password by keyboard, and generating a second cryptogram by encryption algorithm, containing at least:
      - the first cryptogram,
      - biometric variables of the authorised persons,
      - authentication steps through biometric variables to enable decryption of the first cryptogram,
      - the HASH of the firmware version used in the encryption,
      - the unique identification code of the NFC card; and
   - recording the second cryptogram onto the blank NFC card, and securely deleting all information from any device memory and/or secure hardware element.
comprising a second key decryption stage, comprising the following sub-stages:
- entering decryption order,
- reading of the NFC card containing previously stored key/seed to decrypt,
- displaying the unique identification code of the NFC card on the screen,
- confirming the download of the second cryptogram stored on the NFC card to the secure hardware element,
- requesting the entry of the second decryption password of the second cryptogram, and entering it through the keyboard,
- if the second password entered is correct, decrypting the second cryptogram by extracting all its contents to the secure hardware element, and launching a biometric authentication process of authorised persons by identifying their biometric variables through readers of biometric variables,
- validating the biometric variables entered by comparing them with the biometric variables extracted from the second cryptogram,
- if the biometric variables entered are correct, requesting the entry of the first password using the screen,
- reading the first password entered by the authorised person, and if correct, decrypting the first cryptogram, displaying the private key/seed on the screen, for a limited time, and
- after the key has been displayed on the screen for a limited time, deleting all information stored in memory and secure the hardware element.

Thus, with the device of the invention and through the method of the invention the technical effect of being able to encrypt highly sensitive information and also to establish biometric access control to such encrypted information is achieved. It is also an innovation of technical effect that this information, already encrypted, and its biometric access configuration can be stored in an NFC tag, from the same hardware device, and all this without the need for a computer or external device and, above all, without an Internet connection, which minimises the risk of intrusion.

Its configuration is very simple, but suitable for encrypting, storing and controlling access to seeds/private keys of cryptocurrency wallets, this specific use being of great utility in the market and a specific innovation in the sector of cryptocurrency, BitCoin, etc.

In addition, the invention has the following advantages:
- Cryptograms are created and stored using a single device, without the involvement of a computer, with the highest security standards in encryption at present.
- It is capable of protecting data, encrypting secrets/cryptoasset seeds/private keys (a plain text), generating in the process a cryptogram so small as to store it in the memory of an NFC card, and that can only be decrypted, knowing the symmetric passwords and overcoming a biometric access control of authorised persons according to the multi-signature or single-signature configuration established in its original encryption, whether fingerprint, vein or iris structure, or the combination of several of them.

### BRIEF DESCRIPTION OF THE DRAWINGS

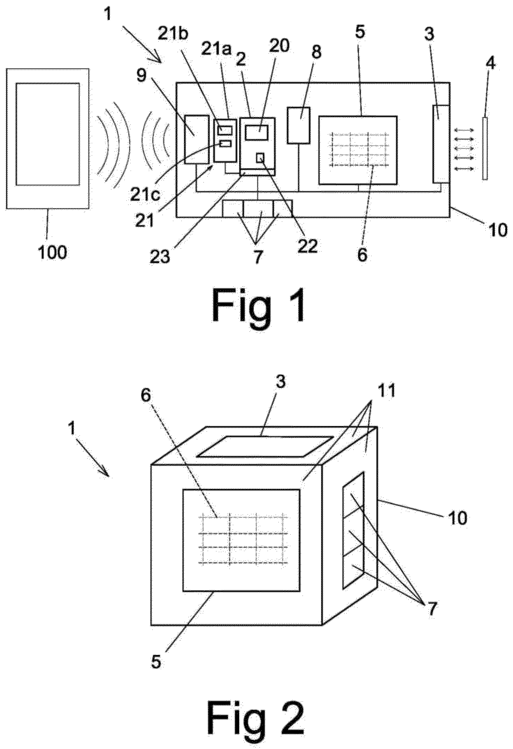

Figure 1 shows a block diagram of the device of the invention.
Figure 2 shows an exterior view of the device of the invention.

### DESCRIPTION OF A PRACTICAL EMBODIMENT OF THE INVENTION

The device (1) for encrypting private keys/seeds of cryptoasset wallets and storage on NFC cards of the invention comprises:
- a first microcontroller (2), comprising a first microprocessor (20) with embedded operating system, memory (22) for operation and storage of firmware, and interfaces (23) with the other elements of the device,
- a secure hardware element (21), comprising a second microcontroller (21a) with a second microprocessor (21b) and firmware physically separated from the previous one (the one controlling the various peripherals), designed exclusively for the functions of cryptogram generation and management of any sensitive process data,
- an NFC card (4) reader/writer (3),
- a screen (5),
- a virtual keyboard (6), displayed on touch screen in this example,
- readers (7) of biometric variables, fingerprints, iris, and vein structure in this example, and
- a power supply (8).

The secure hardware element also includes a secure memory (21c), also separate from the general operating memory (22), which allows storing in this area maximum security data to hinder any physical intrusion during the encryption processes.

Furthermore, it is envisaged that the firmware update of the device is materialised by means of a wireless link (9) (BT, WiFi,...) limited by asymmetric key exchange, achieving the complete encryption of the communication, whose update passes through a validation of the Hash of the firmware to be updated, thus avoiding the installation of an unauthorised firmware. This is the only valid external connection to link exclusively with a paired personal terminal (100) (only for firmware updates), so as to guarantee that the device will never be connected to the Internet, since it will only be able to communicate for updates with the paired terminal.

The device (1), furthermore, comprises a housing (10) closed with flat faces (11) where the operating elements (keyboard/screen, NFC reader, etc.) are arranged, which facilitates its handling.

The method of the invention comprises the following stages:
- encryption stage of a key; comprising the following sub-stages:
   - entering an encryption command using physical or virtual keyboard (6) (displayed on the screen, touch screen in this case),
   - reading an NFC card (4) and verifying that it is a blank card, through an NFC card reader/writer (3), with the process ending if it is not a blank NFC card (4) and displaying this result on the screen (5),
   - if the NFC card (4) is blank, displaying on the screen (5) its unique identification code, so that the user verifies this code with the one printed on the card itself,
   - entering the private key/seed to be encrypted through the keyboard (6) using the BIPS-39 standard in a predictive manner with only the first 4 letters,
   - displaying on the screen (5), without the possibility of editing, the key entered and validating the key displayed,
   - displaying on the screen (5) a message requesting a first password for encrypting the private key/seed entered,
   - entering the password through the keyboard (6) and generating a first cryptogram containing the private key/seed encrypted by encryption algorithm, and temporarily storing the first cryptogram in the secure hardware element,
   - requesting biometric signature of the person(s) authorised to perform decryptions of the private key/seed (on screen), and entering the biometric signatures of those authorised, through readers (7) of biometric variables (fingerprint, iris, or vein structure),
   - storing the biometric signatures in the secure hardware element (21),
   - requesting (via screen) the entry of a second password for encrypting the biometric variables, entering said second password using the keyboard (6), and generating a second cryptogram by encryption algorithm, containing, at least:
      - the first cryptogram,
      - biometric variables of the authorised persons,
      - authentication steps through biometric variables to enable decryption of the first cryptogram,
      - the HASH of the firmware version used in the encryption,
      - the unique identification code of the NFC card; and
   - recording the second cryptogram onto the blank NFC card (4), after which all information is securely deleted from any device memory and/or secure hardware element;
comprising a second key decryption stage, comprising the following sub-stages:
- entering decryption order using the keyboard (6),
- reading of the NFC card (4) containing the previously stored private key/seed to decrypt,
- displaying the unique identification code of the NFC card on the screen (5) (and message to check that it is correct)
- confirming (using the keyboard) the download of the second cryptogram stored on the NFC card (if the ID is correct) to the secure hardware element,
- requesting the entry of the second decryption password of the second cryptogram, and entering it through the keyboard (6),
- if the second password entered is correct, decrypting the second cryptogram by extracting all its contents to the secure hardware element (21), and launching a biometric authentication process of authorised persons by identifying their biometric variables through readers (7) of biometric variables,
- validating the biometric variables entered by comparing them with the biometric variables extracted from the second cryptogram,
- if the biometric variables entered are correct, requesting the entry of the first password using the screen (5),
- reading the first password entered by the authorised person (through the keyboard (6)), and if correct, decrypting the first cryptogram, displaying the private key/seed on the screen (5), for a limited time (e.g. 60 seconds, which can be extended by requesting confirmation on the screen), and
- after the display of the key on the screen (5) for the limited time, securely deleting all information stored in any memory and secure hardware elements.

It is preferred that the on-screen display sub-stages (5) of the unique NFC card identification code (4) comprise displaying the same in QR format, so that the user can read it with a Smartphone App, verify the match and save it in said App with an alias.

Likewise, it is preferred that the first password and/or the second password comprise a maximum of 40 characters and a minimum of 12 characters, including numbers, uppercase, lowercase and symbols, in order to achieve sufficient complexity, thus avoiding weaknesses in the password that could reduce the entropy of the resulting cryptogram.

In addition, a symmetric algorithm such as AES 256, at least (or any superior algorithm that may be implemented in the future), will ideally be used as the encryption algorithm for the cryptograms, since there is currently no supercomputer on our planet capable of breaking this encryption system by brute force. Some studies estimate that today's most powerful supercomputers would take several million years to achieve this.

According to the method of the invention, it is preferred that the sub-stage of entering the biometric signature of the person(s) authorised to perform key decryptions comprises entering the biometric signature of a single person, or entering the biometric signatures of several persons, with a maximum of six persons, allowing decryption with all of them, or with five, four, three or with two of them, or only with one of them as configured in their original encryption. This allows the use of the key by different authorised people, with the same security features, forcing if required the presence of several people to access the encrypted private key/seed.

In addition, it is preferred that the sub-stage of entering the biometric signature of the authorised person(s) to perform key decryptions comprises the entry of:
- a maximum of four fingerprints per authorised person and a minimum of two,
- a maximum of two iris configurations per authorised person; only one biometric data entry per person is sufficient for access to the first cryptogram,
which allows several biometric validation options to be used in case any of them fail.

Ideally, the sub-stage of recording the second cryptogram on the NFC card (4) will comprise the following steps:
- requesting (via the display for example) the user to bring the NFC card (4) close to the NFC card (4) reader/writer (3),
- verifying that the unique identification code of the NFC card (4) is correct, performing the recording in this case, and warning otherwise, to avoid saving the second cryptogram on the wrong card,

Also, it is preferred that the sub-stage of recording the second cryptogram on the NFC card (4) comprises a step of deleting data, and restarting the process, in the event of a second erroneous reading of the unique identification code of the NFC card (4) forcing the user to start completely over.

It is, likewise, preferred that the sub-stage of entering the second password comprises a stage of deleting data and restarting the process in the event of a second erroneous entry of the same, forcing the user to start completely over: comprising the introduction of a temporary delay of enabling new actuation attempts on the NFC card (4) with that unique identification code.

Also, the sub-stage of validation of the biometric variables entered with the biometric variables extracted from the second cryptogram will comprise a step of data deletion and restarting of the process in the event of any authentication failure; adding an access lock to the first cryptogram stored in the secure hardware element (21) until obtaining a correct biometric reading obtained only from a biometric reader. This seeks to have additional logic, with additional communication that certifies that there has been at least one biometric authentication, to allow access to the first cryptogram.

In the same way, the sub-stage of decryption of the first cryptogram will include a step of data deletion and restart of the process in case of erroneous entry of the first password.

The method of the invention additionally comprises a stage of cloning the information stored on the NFC card (4), comprising the following sub-stages:
- entering the cloning command using the keyboard (6),
- requesting to read the NFC card (4) to be cloned, and displaying its unique identification code on the screen (5),
- prompting you to enter the second password,
- requesting biometric authentication of at least one of the authorised persons,
- reading the requested biometric variables and, if correct, downloading the second cryptogram into the secure hardware element (21),
- requesting a blank target NFC card (4) to be brought close to the card reader/writer (3) of , displaying its unique identification code on the screen (5),
- requesting confirmation from the authorised person for cloning on the blank NFC card (4) whose unique identification code has been displayed on the screen, and copying the second cryptogram onto the blank NFC card (4), and
- deletion of the second cryptogram from the memory and the secure hardware element after the copy has been made.

In this case, the sub-stage of entering the second password includes a step of deleting data and restarting the process in the event of a second wrong entry.

Having sufficiently described the nature of the invention, as well as the manner in which it is carried out in practice, it should be noted that the provisions indicated above and shown in the accompanying drawings are subject to modifications in details insofar as they do not alter the essence of the invention.

## Claims

1. -Device (1) for encrypting private keys/seeds of cryptoasset wallets and storage on NFC cards;
**characterised in that it** comprises:
- a first microcontroller (2), comprising a first microprocessor (20) with embedded operating system, memory (22) for operation and storage of firmware, and interfaces (23) with the other elements of the device,
- a secure hardware element (21), comprising a second microcontroller (21a) with a second microprocessor (21b) and firmware physically separated from the first microcontroller (2) and first microprocessor (20), for the functions of cryptogram generation and management of any sensitive process data,
- an NFC card (4) reader/writer (3),
- a screen (5),
- a keyboard (6),
- readers (7) of biometric variables, and
- a power supply (8);
- and wherein the secure hardware element (21), comprises a secure memory (21c), separate from the general operating memory (22), for storing maximum security data.

2. -Device (1) for encrypting private keys/seeds of cryptoasset wallets and storage on NFC cards according to claim 1, **comprising** a wireless link (9) limited by asymmetric ciphers and firmware Hash validation to link exclusively with a paired personal terminal (100) whose only supported process is the update of the device's own firmware (1).

3. -Device (1) for encrypting private keys/seeds of cryptoasset wallets and storage on NFC cards according to any of the preceding claims **comprising** a housing (10) closed with flat faces (11) wherein the operating elements are arranged.

4. -A method for encrypting private keys/seeds of cryptoasset wallets and storage on NFC cards;
**characterised in that it** comprises the stages of:
- encryption of a key; comprising the following sub-stages:
- entering an encryption command using physical or virtual keyboard (6),
- reading an NFC card (4) and verifying that it is a blank card, through an NFC card reader/writer (3), with the process ending if it is not a blank NFC card (4) and displaying this result on the screen (5),
- if the NFC card (4) is blank, displaying on the screen (5) its unique identification code,
- entering the private key/seed to be encrypted using the keyboard (6),
- displaying on the screen (5), without the possibility of editing, the key entered and validating the key displayed,
- displaying on the screen (5) a message requesting a first password for encrypting the key entered,
- entering the password using the keyboard (6) and generating a first cryptogram containing the encrypted private key/seed, and temporarily storing the first cryptogram in the secure hardware element (21),
- requesting biometric signature of the authorised person or persons to perform decryptions of the key, and entering the biometric signatures of said authorised persons, through readers (7) of biometric variables,
- storing the biometric signatures in the secure hardware element (21),
- requesting the entry of a second password for encrypting the biometric variables, entering said second password using the keyboard (6), and generating a second cryptogram by means of encryption algorithm, containing at least:
- the first cryptogram,
- biometric variables of the authorised persons,
- authentication steps through biometric variables to enable decryption of the first cryptogram,
- the HASH of the firmware version used in the encryption,
- the unique identification code of the NFC card; and
- recording the second cryptogram on the blank NFC card (4), and securely deleting all information from any device memory and/or secure hardware element.
comprising a second key decryption stage, comprising the following sub-stages:
- entering decryption order using the keyboard (6),
- reading of the NFC card (4) containing the previously stored private key/seed to decrypt,
- displaying the unique identification code of the NFC card on the screen (5),
- confirming the download of the second cryptogram stored on the NFC card (4) to the secure hardware element (21),
- requesting the entry of the second decryption password of the second cryptogram, and entering it through the keyboard (6),
- if the second password entered is correct, decrypting the second cryptogram by extracting all its contents to the secure hardware element (21), and launching a biometric authentication process of authorised persons by identifying their biometric variables through readers (7) of biometric variables,
- validating the biometric variables entered by comparing them with the biometric variables extracted from the second cryptogram,
- if the biometric variables entered are correct, requesting the entry of the first password using the screen (5),
- reading the first password entered by the authorised person, and if correct, decrypting the first cryptogram, displaying the private key/seed on the screen (5), for a limited time, and
- after the key has been displayed on the screen (5) for a limited time, deleting all information stored in any memory and the secure hardware element.

5. -Method for encrypting private keys/seeds of cryptoasset wallets and storage on NFC cards according to claim 4, **wherein** the sub-stages of displaying on screen (5) the unique identification code of the NFC card (4) comprise displaying the same in QR format.

6. -Method for encrypting private keys/seeds of cryptoasset wallets and storage on NFC cards according to any of claims 4 or 5, **wherein** the first password and the second password comprise a maximum of 40 characters and a minimum of 12 characters wherein numbers, uppercase, lowercase and symbols are included, to achieve sufficient complexity, thus avoiding weaknesses in the password that could decrease the entropy of the resulting cryptogram.

7. -Method for encrypting private keys/seeds of cryptoasset wallets and storage on NFC cards according to any of claims 4 to 6, **wherein** the cryptogram encryption algorithm comprises at least one AES-256 type symmetric algorithm.

8. -Method for encrypting private keys/seeds of cryptoasset wallets and storage on NFC cards according to any of claims 4 to 7, **wherein** the sub-stage of entering the biometric signature of the authorised person(s) to perform key decryptions comprises:
- entry of the biometric signature of a single person, or
- entry of the biometric signatures of several people, with a maximum of six people, allowing decryption with all of them, or with five, four, three or with two of them, or only with one of them, as configured in its creation.

9. -Method for encrypting private keys/seeds of cryptoasset wallets and storage on NFC cards according to any of claims 4 to 8, **wherein** the sub-stage of entering the biometric signature of the person(s) authorised to perform key decryptions comprises entering:
- a maximum of four fingerprints per authorised person and a minimum of two,
- a maximum of two iris configurations per authorised person;
only one biometric data entry per person is sufficient for access to the first cryptogram,

10. -Method for encrypting private keys/seeds of cryptoasset wallets and storage on NFC cards according to any of claims 4 to 9, **wherein** the sub-stage of recording the second cryptogram on the NFC card (4) comprises the following stages:
- requesting the user to bring the NFC card (4) close to the NFC card (4) reader/writer (3),
- verifying that the unique identification code of the NFC card (4) is correct, performing the recording in this case, and warning otherwise.

11. -Method for encrypting private keys/seeds of cryptoasset wallets and storage on NFC cards according to any of claims 4 to 10, **wherein** the sub-stage of recording the second cryptogram on the NFC card (4) comprises a step of deleting data and restarting the process in the event of a second erroneous reading of the unique identification code of the NFC card (4).

12. -Method for encrypting private keys/seeds of cryptoasset wallets and storage on NFC cards according to any of claims 4 to 11, **wherein** the sub-stage of entering the second password comprises a step of deleting data and restarting the process in the event of a second erroneous entry, comprising introducing an incremental time delay of enabling new actuation attempts on the NFC card (4) with that unique identification code.

13. -Method for encrypting private keys/cryptoasset wallet seeds and storage on NFC cards according to any of claims 4 to 12, **wherein** the sub-stage of extracting the contents of the second cryptogram comprises storing the first cryptogram and extracted biometric variables in a hardware secure element area (21) with differentiated address with respect to the general memory (22), where the rest of the contents of the second cryptogram will be stored.

14. -Method for encrypting private keys/seeds of cryptoasset wallets and storage on NFC cards according to any of claims 4 to 13, **wherein** the sub-stage of validating the entered biometric variables with the biometric variables extracted from the second cryptogram comprises a stage of securely deleting data and restarting the process in the event of any authentication failure; adding an access lock to the first cryptogram stored in the secure hardware element **(21**) until obtaining a correct biometric reading obtained only from a biometric reader.

15. -Method for encrypting private keys/seeds of cryptoasset wallets and storage on NFC cards according to any of claims 4 to 14, **wherein** the sub-stage of decrypting the first cryptogram comprises a step of securely deleting data and restarting the process in case of erroneous entry of the first password.

16. -A method for encrypting private keys/seeds of cryptoasset wallets and storage on NFC cards according to any of claims 4 to 15, **wherein it** further comprises a stage of cloning the information stored on the NFC card (4), comprising the following sub-stages:
- entering the cloning command using the keyboard (6),
- requesting to read the NFC card (4) to be cloned, and displaying its unique identification code on the screen (5),
- requesting the entering of the second password,
- requesting biometric authentication of at least one of the authorised persons,
- reading the requested biometric variables and, if correct, downloading the second cryptogram to the secure hardware element (21),
- requesting a blank target NFC card (4) to be brought close to the card reader/writer (3) of , displaying its unique identification code on the screen (5),
- requesting confirmation from the authorised person for cloning on the blank NFC card (4) whose unique identification code has been displayed on the screen, and copying the second cryptogram onto the blank NFC card (4), and
- deletion of the second cryptogram from the memory and the secure hardware element (21) after the copy has been made.

17. -Method for encrypting private keys/seeds of cryptoasset wallets and storage on NFC cards according to claim 16, **wherein** the sub-stage of entering the second password comprises a step of deleting data and restarting the process in case of erroneous entry a second time.
